# EUROPÄISCHE PATENTSCHRIFT

(11) **EP 0 474 006 B1**
(45) Veröffentlichungstag und Bekanntmachung des Hinweises auf die Patenterteilung: **11.10.1995**
(21) Anmeldenummer: 91113835.2
(22) Anmeldetag: 19.08.1991
(51) Int. Cl.: H02P 7/00, A23G 1/04, H02P 1/30, A23G 1/12, G05D 13/62

(54) **Verfahren und Vorrichtung zum Betrieb einer Conche**
Method and device for the operation of a conche
Procédé et dispositif pour l'exploitation d'une conque

(30) Priorität: 03.09.1990 DE 4027882
(43) Veröffentlichungstag der Anmeldung: 11.03.1992
(73) Patentinhaber: RICHARD FRISSE GMBH MASCHINENFABRIK, 32107 Bad Salzuflen (DE)
(72) Erfinder: Müntener, Kurt, W-4902 Bad Salzuflen (DE); Mechias, Bernd, Dr., W-3300 Braunschweig (DE); Schmidt, Rainer, W-4900 Herford (DE); Bollhorst, Claus-Peter, W-4925 Kalletal 2 (DE)
(74) Vertreter: Révy von Belvárd, Peter

(56) Entgegenhaltungen:
- EP-A- 0 116 831
- DE-A- 3 934 047
- US-A- 4 288 828
- US-A- 4 300 079

## Beschreibung

Die Erfindung betrifft ein Verfahren zum Betrieb einer Conche nach dem Oberbegriff des Anspruches 1 sowie eine Vorrichtung zur Durchführung eines derartigen Verfahrens.

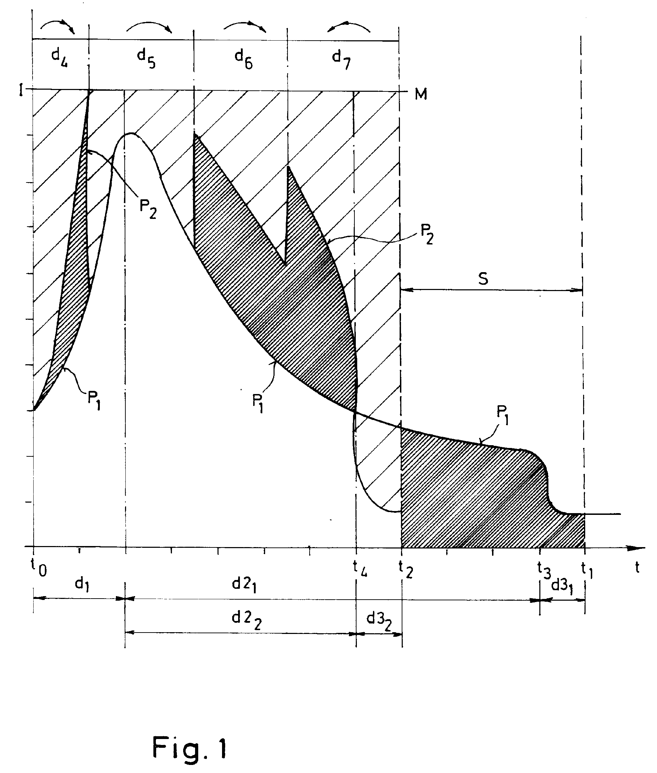

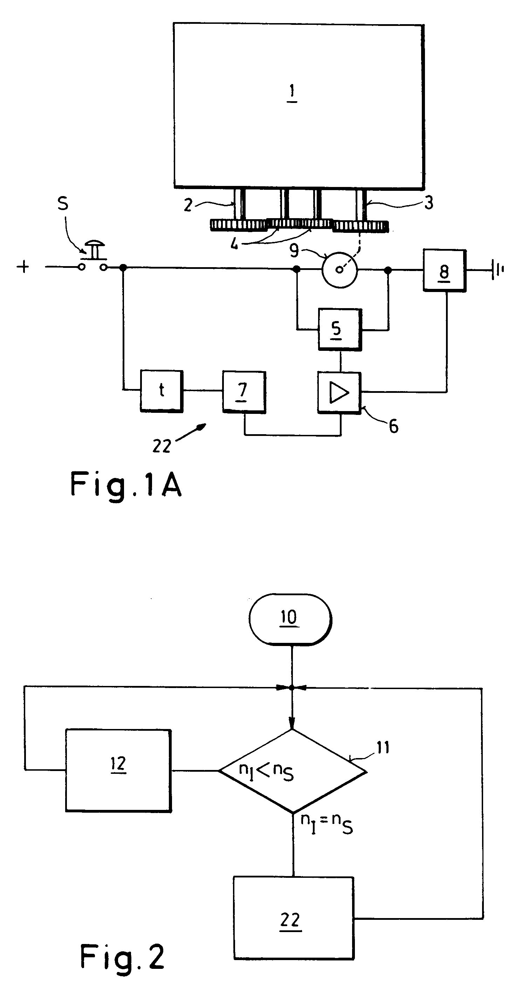

Bei der aus der DE-OS 39 34 047 bekannten Conche wird die Drehzahl des Motors in Abhängigkeit von einem vorgegebenen Motorstrom eingestellt. Damit soll die während eines Conchierprozesses maximal mögliche Antriebsleistung den verschiedenen Aggregatzuständen der Schokoladenmasse entsprechend aufrecht erhalten werden. In Fig. 1 der vorliegenden Anmeldung ist die während eines Conchierprozesses erbrachte Leistung über der Zeit graphisch dargestellt. Die integrierte Fläche unter der Kurve stellt dabei die zur Conchierung aufgebrachte Energie bzw. Arbeit dar.

Geht man von einer Conche aus, die durch Änderung der Drehgeschwindigkeit und der Drehrichtung der Rotoren sowohl als Trockenconche als auch als Flüssigconche betreibbar ist, so ergibt sich normalerweise eine Kurve P₁, die die Stromaufnahme und damit einen Parameter der Motorleistung in Funktion der Zeit darstellt. Dabei durchläuft die Schokoladenmasse während eines Zeitabschnitts d1 zunächst eine pastös-trockene Phase und geht anschliessend in eine zäh-plastische Phase etwa für einen gewünschten Zeitabschnitt d2 über. Etwa ab einem Zeitpunkt t3 geht die Schokolademasse durch Zugabe von Fett und Emulgatoren in eine flüssige Phase über, in der dann nur noch ein Minimum an Energie eingebracht wird. Die flüssige Phase dauert über einen Zeitraum d3.

Es ist auch bekannt, zur Einsparung von Conchierzeit die notwendige Conchierarbeit durch höhere Leistungsumsetzung in der pastös-trockenen und der zäh-plastischen Masse in kürzerer Zeit einzubringen. Die Leistungskurve dazu ist in Fig. 1 der vorliegenden den Anmeldung mit P2 dargestellt. Während eines ersten Zeitabschnittes d4 arbeitet die Conche mit hoher Geschwindigkeit, anschliessend für einen Zeitabschnitt d5 mit geringerer Geschwindigkeit. Sinkt schliesslich die Stromaufnahme des Antriebsmotors wegen der fortlaufenden Erweichung der Schokolademasse wieder ab, wird wieder mit höherer Geschwindigkeit während eines Zeitabschnittes d6 gearbeitet, um dann für den Zeitabschnitt d7 in umgekehrter Drehrichtung bei weiterhin hoher Geschwindigkeit den Conchierprozess abzuschliessen. Auch in der für die Stromkurve P2 beschriebenen Arbeitsweise bilden sich eine pastös-trockene Phase während der Zeitdauer d1, eine zäh-plastische Phase während einer gewünschten Zeitdauer d2₂, um ebenfalls, nach Zugabe von Fett und Emulgatoren im Zeitpunkte t4, die flüssige Phase für die Zeitdauer d3₂ zu erreichten. Dabei ergibt sich die mit s in Fig. 1 dargestellte Zeitersparnis gegenüber der Kurve P1 dadurch, dass die mit der Stromkurve P1 erreichte Arbeit vom Zeitpunkte t0 bis t1 äquivalent der mit der Stromkurve P2 erreichten Arbeit vom Zeitpunkt t0 bis t2 ist.

Aus dem Kurvenverlauf ist auch ersichtlich, dass unterhalb eines zulässigen Maximalwertes M ein schräg schraffierter Bereich verbleibt, der zu weiteren Intensivierung der Conchierarbeit ausgenützt werden könnte.

Der Erfindung liegt die Aufgabe zugrunde, ein Verfahren zum Betrieb einer Conche anzugeben, mit dem die erforderliche Zeitdauer eines Conchierprozesses durch Steigerung der Arbeitsleistung der Conche verringert werden kann. Ferner ist eine Vorrichtung zur Durchführung des Verfahrens anzugeben.

Nun ist es aus der US-A-4288828 bekannt, während der Hochlaufzeit eines Motors zusätzlich zur Überwachung der Leistungsaufnahme eines Drehzahlüberwachung durchzuführen. Dabei wird der Motor auch während des Hochlaufes abgestellt, wenn die Überlast festgestellt wird.

Die Aufgabe wird erfindungsgemäss nach dem Verfahren des Anspruches 1 gelöst.

Dadurch werden verscniedene Betriebsweisen der Conche möglich, ohne dass sich dadurch eine Beeinträchtigung des Regelverhaltens ergibt, nämlich sowohl ein Betrieb bzw. ein Anfahren mit bereits gefüllter Conche, als auch ein Betrieb im Leerlauf bzw. das Anfahren, wobei dann die Conche erst zunehmend befüllt wird, wie sich aus den späteren Erläuterungen ergibt.

Wird die Conche gefüllt betrieben, so wird dadurch, dass das aus SOLL- und IST-Motorleistung (oder wenigstens eines Parameters derselben gebildete Differenzsignal während einer gegebenen Zeitdauer (sie braucht nicht wertmässig vorgegeben zu sein, sondern kann vom Eintreten eines Ereignisses abhängig gemacht werden) unberücksichtigt bleibt, wird eine erhöhte Stromaufnahme des Motors möglich, so dass dieser in kürzerer Zeit mit einem höheren Motorstrom zumindest auf seine Solldrehzahl hochläuft. Folglich wird die Anlaufphase beim Conchierprozess verkürzt, woraus sich auf den gesamten Conchierprozess eine Zeitersparnis ergibt.

Vorteilhaft geht man im Sinne des Anspruches 2 vor, da hierdurch die relativ lange Anlaufphase des Motors vom Stillstand auf die erforderliche Drehzahl deutlich verringert werden kann. Besonders günstig ist es jedoch, wenn von den Merkmalen des Anspruches 3 Gebrauch gemacht wird.

In besonderer Weiterbildung der Erfindung sind die Merkmale des Anspruches 7 vorgesehen. Dies erfolgt vorteilhaft in der Art und Weise, dass der Drehzahlregelkreis immer dann den Stromregelkreis übersteuert, wenn die Istdrehzahl des Antriebsmotors von der für den Zeitabschnitt vorgesehenen Solldrehzahl abweicht.Wird dann nämlich die Conche im vollen Zustand angefahren, so ergibt sich der oben bereits beschriebene Effekt. Wird allerdings die Conche leer angefahren, so wird wegen ungenügender Stromaufnahme die Stromregelung praktisch sofort in Tätigkeit treten und gleich zu Anfang eine Höchstdrehzahl erlauben. Erst mit zunehmender Befüllung wird die Drehzahl so weit abfallen, dass sie einen vorgegebenen Wert unterschreitet, womit die genannte gegebene Zeitdauer beginnt. Diese Ausgestaltung erlaubt also eine ungewöhnliche Flexibilität der Betriebsweise, zumal dem Motor (bzw. den Motoren bei mehreren Antriebsmotoren) jedesmal während der gegebenen Zeitdauer gestattet wird, die höchstmögliche Leistung aufzunehmen.

Geht man im Sinne des Anspruches 8 vor, so ist gesichert, dass der Motor nicht unter seine Solldrehzahl abfallen kann, weil die diesbezügliche Regelung früh genug eingreift. Dies ergibt sich in besonders günstiger Weise gemäss Anspruch 9. Umgekehrt erfolgt die Rückkehr zur leistungsabhängigen Regelung am günstigsten im Sinne eines der Ansprüche 10, 11 oder 12.

Vorrichtungen zur Durchführung des Verfahrens sind in den Ansprüchen 13 bis 20 angegeben.

Weitere Merkmale der Erfindung ergeben sich aus der nachfolgenden Beschreibung und der Zeichnung, in der Ausführungsbeispiele der Erfindung dargestellt sind. Es zeigen:
- Fig. 1: ein Schaubild der Leistungskurve eines Conchierprozesses über der Zeit,
- Fig. 1A: in schematischer Darstellung einen vereinfachten Regelkreis für den Antriebsmotor einer Conche,
- Fig. 2: eine Prinzipdarstellung einer Wechselschaltung zum Betrieb eines Conchenmotors über einen Stromregelkreis und einen Drehzahlregelkreis,
- Fig. 3: ein schematisches Blockschaltbild für ein Ausführungsbeispiels einer Wechselschaltung nach Fig. 2, und
- Fig. 4: ein Programm für die softwaremässige Ausführung des erfindungsgemässen Verfahrens gemäss einer bevorzugten Ausführungsvariante mit Hilfe einer Computersteuerung.

In einer Conche 1 (Fig. 1A) sind mittels zweier Rotorwellen 2 und 3 im Inneren des Troges der Conche 1 in zugehörigen Trogabteilen umlaufende Rotoren angetrieben. Zwar zeigt das Ausführungsbeispiel eine Zwei-Wellen-Conche, jedoch kann die Conche beliebige Wellenzahl, beispielsweise nur eine Welle oder drei Wellen usw. aufweisen.

Der Antrieb der Rotorwellen 2 und 3 erfolgt über einen gemeinsamen Antriebsmotor 9, z.B. einen Kurzschlussläufermotor, vorzugsweise jedoch ein Mehrphasenmotor, der im Ausführungsbeispiel die Welle 3 und über Zwischenräder 4 die Welle 2 antreibt. Ein getrennter Antriebsmotor für jede Welle könnte auch zweckmässig sein. Der Prinzipaufbau einer Conche ist in der DE-OS 39 24 047 im einzelnen beschrieben, auf die hier hingewiesen wird.

Der Antriebsmotor 9 wird über einen schematisch angedeuteten Hauptschalter S vorzugsweise an ein nur schematisch dargestelltes Mehrphasennetz angeschaltet. Mit dem Schliessen des Hauptschalters S wird gleichzeitig ein Zeitglied t getriggert, dessen Ausgangssignal zum Anlaufen des Antriebsmotors 9 ausgewertet wird.

Die Stromaufnahme des Antriebsmotors 9 wird über eine - vorzugsweise im Nebenschluss zum Motor liegende - Strommesseinrichtung 5 an sich bekannter Bauart erfasst, deren Ausgangssignal dem Ist-Wert des Motorstroms entspricht und auf einen Vergleicher 6 geschaltet ist. Seinen Vergleichswert erhält der Vergleicher 6 von einem Sollwertgeber 7, der den einstellbaren Sollwert des Motorstroms angibt. Das Ausgangssignal des Vergleichers 6 ist einer Motorsteuerschaltung 8 zugeführt, die - z.B. über eine Phasenanschnittsteuerung - die Stromaufnahme des Motors regelt. Der Soll-Wert des Sollwertgebers 7 ist vorzugsweise unterhalb eines maximal zulässigen Motorstroms gewählt, sodass Überlastungen des Motors 9 mit Sicherheit vermieden sind. Es versteht sich jedoch, dass gegebenenfalls statt der Messung des Motorstromes die Motorspannung oder beide Leistungsparameter zur Regelung herangezogen werden können.

Beim Anlaufen des Antriebsmotors 9 im gefüllten Zustande der Conche nach dem Starten des Conchierprozesses (Schliessen des Hauptschalters S) kann ein sehr hoher Motorstrom zugelassen werden, da die Schokoladenmasse noch im pastös-trockenen Zustand ist. Die vorgesehene Motorstrom-Begrenzung würde dem sonst entgegenwirken. Erfindungsgemäss kann daher ein Zeitglied t vorgesehen sein, dessen Ausgangssignal den Sollwertgeber 7 steuert. So wird bei anliegendem Ausgangssignal nach dem Schliessen des Hauptschalters S für die vom Zeitglied t vorgegebene Zeitdauer der Sollwertgeber 7 derart eingestellt bzw. übersteuert, dass der Antriebsmotor 9 wenigstens in der Anlaufphase des Conchierprozesses einen höheren, beispielsweise den maximal zulässigen Motorstrom aufnehmen kann. Dies kann so erfolgen, dass bei anliegendem Ausgangssignal des Zeitgliedes t der Sollwert des Sollwertgebers 7 für die Anlaufphase so weit erhöht wird, dass er etwa dem sonst maximal zugelassenen Motorstrom entspricht (kleine Abweichungen vom maximalen Motorstrom sind möglich). Es kann auch zweckmässig sein, den Sollwert des Sollwertgeber 7 nicht nur über den vorgegebenen Sollwert, sondern auch deutlich über den maximal zugelassenen Motorstrom zu erhöhen, sodass der Stromregelkreis 22 praktisch ausgeschaltet ist. Dies kann zweckmässig auch durch einen vom Zeitglied t angesteuerten Unterbrecher zwischen dem Vergleicher 6 und der Motorsteuerschaltung 8 erzielt werden.

Es kann vorteilhaft sein, dass Zeitglied t immer dann zu starten, wenn die Drehzahl oder Drehrichtung des Antriebmotors gewechselt wird, so z.B. am Übergange des Zeitabschnitts d4 zum Zeitabschnitt d5 bzw. vom Zeitabschnitt d6 auf den Zeitabschnitt d7. Die Zeitdauer des Zeitgliedes ist so gewählt, dass der Antriebsmotor in der Anlaufphase sicher auf Nenndrehzahl hochlaufen kann. Diese Zeitdauer ist im allgemeinen relativ kurz; sie liegt beispielsweise im Bereich von zwei Minuten.

Um auch ein Hochlaufen des Antriebsmotors zumindest auf Solldrehzahl sicherzustellen, kann es vorteilhaft sein, neben dem Stromregelkreis 22 einen Drehzahlregelkreis 12 vorzusehen, insbesondere um wenigstens anfänglich den Motor über die Drehzahl zu regeln, während gleichzeitig Ist- und Solleistungsparameter miteinander verglichen werden.

Nach dem Start 10 des Antriebsmotors wird über eine Entscheidungsraute 11 die über einen Drehzahlmesser erfasste aktuelle Motordrehzahl n_{I} (Ist-Wert) mit der Solldrehzahl n_{S} des Motors (Soll-Wert) verglichen. Ist der Istwert n_{I} kleiner oder gleich dem Sollwert n_{S′}, so wird auf den Drehzahlregelkreis 12 zur entsprechenden Veränderung der Drehzahl z.B. durch Frequenzregelung geschaltet. Der Vergleich zwischen Istdrehzahl und Solldrehzahl wird andauernd wiederholt, bis die Istdrehzahl die Solldrehzahl erreicht und über die Entscheidungsraute 11 auf den Stromregelkreis 22 weitergeschaltet wird. Auch während des Betriebs des Stromregelkreises 22 wird der Vergleich zwischen Solldrehzahl und Istdrehzahl immer wieder vorgenommen, um bei Drehzahlabfall wieder über die Entscheidungsraute 11 auf den Drehzahlregelkreis 12 umzuschalten.

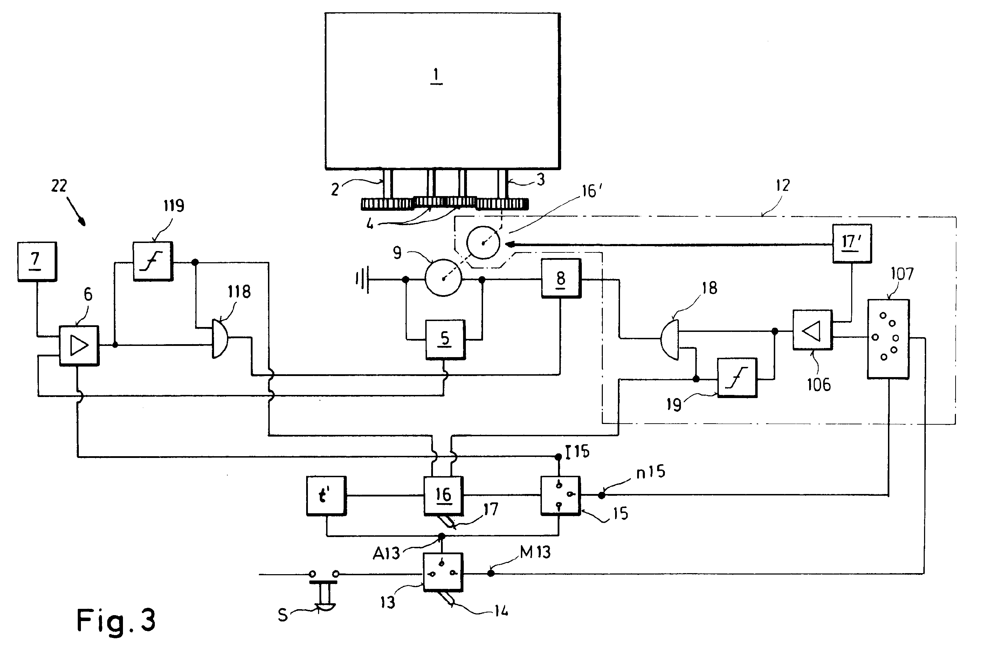

Mit einer derartigen Wechselschaltung wird die für die Conchierarbeit wichtige Drehzahl neben der ständig überwachten Leistung ebenfalls überwacht, sodass zwar einerseits eine Mindestdrehzahl (= Solldrehzahl) erhalten wird, anderseits aber eine optimale Leistungsregelung gewährleistet ist, bei der die für die Conchierarbeit wichtige Höchstleistung jeweils erhalten bleibt, Eine vorteilhafte Ausführungsform einer solchen Wechselschaltung gemäss Fig. 2 ist in Fig. 3 als Blockschaltbild schematisch dargestellt, wobei Teile gleicher Funktion die selben Bezugszeichen, wie bisher besitzen, Teile ähnlicher Funktion jedoch die selben Bezugszeichen mit hinzugesetzter Hundertziffer.

Der in Fig. 3 dargestellte Stromregelkreis 22 besteht wiederum aus den Baugruppen 5 bis 8 gemäss Fig. 1A. Der Vergleicher 6 vergleicht den vom Sollwertgeber 7 aufgegebenen Sollwert des Motorstroms mit dem von der Strommesseinrichtung 5 erfassten Istwert des Motorstroms. Der Ausgang des Vergleichers 6 ist über eine Torschaltung 118 auf die Motorsteuerschaltung 8 geschaltet. Der Ausgang des Vergleichers 6 ist ferner über einen Schwellwertschalter 119 auf den zweiten Eingang der Torschaltung 118 und auf eine Steuerstufe 16 gelegt.

Der aus Fig. 3 ersichtliche Drehzahlregelkreis 12 besteht aus einem Vergleicher 106, der den Sollwert eines Drehzahlsollwertgebers 107 mit einem Drehzahlistwert vergleicht. Der Drehzahl-Istwert wird beispielsweise über einen Frequenzgenerator 16′ an der Motorwelle des Antriebsmotors 9 abgegriffen und über einen Messumformer 17′ dem Vergleichseingang des Vergleichers 106 zugeführt. Der Ausgang des Vergleichers ist über eine Torschaltung 18 (logische UND-Verknüpfung) mit der Motorsteuerschaltung 8 verbunden. Ferner liegt der Ausgang des Vergleichers 106 am Eingang eines Schwellwertschalters 19, dessen Ausgang mit dem zweiten Eingang der Torschaltung 18 und der Steuerstufe 16 verbunden ist.

Nach dem Schliessen des Hauptschalters S wird über einen Wählschalter 13 der Betriebsmodus der Wechselschaltung eingestellt. Über einen Kipphebel 14 kann der Wählschalter 13 zwischen einem Ausgang A13 für automatische Leistungsregelung und einem Ausgang M13 für manuelle Drehzahlregelung umgeschaltet werden.

Ist der Ausgang M13 angesteuert, ist der Drehzahlregelkreis 12 aktiv geschaltet. An dem Sollwertgeber 107 für die Drehzahl wird mittels einer beliebigen Betätigungseinrichtung eine bestimmte Drehzahl aus einer Anzahl von Drehzahlen ausgewählt, sodass die Motorsteuerung 8 die entsprechende Drehzahl in Abhängigkeit vom Ausgangssignal des Vergleichers 106 einstellt.

Ist der Wählschalter 13 auf den Ausgang A13 geschaltet, wird eine Schaltstufe 15 aktiviert, die ferner von einer Steuerstufe 16 umschaltbat ist. Die Steuerstufe 16 kann einerseits manuell über eine Handhabe 17 betätigt werden oder durch elektrische Ausgangssignale eines dem Zeitglied t (Fig. 1A) entsprechenden Zeitgliedes t′, des Stromregelkreises 22 oder des Drehzahlregelkreises 12. Ist über die Steuerstufe 16 die Schaltstufe 15 auf den Ausgang I15 geschaltet, ist der Stromregelkreis 22 aktiv. Ist die Schaltstufe 15 hingegen auf den Ausgang n15 geschaltet, ist der Drehzahlkreis 12 aktiviert. Der Ausgang n15 wirkt dabei auf den Sollwertgeber 107 des Drehzahlregelkreises 12, wodurch mit der Inbetriebnahme des Drehzahlregelkreises 12 auch der bei automatischer Leistungsregelung gewünschte Sollwert für die Drehzahl eingeschaltet wird.

Der Schwellwert des Schwellwertschalters 19 des Drehzahlregelkreises 12 ist derart eingestellt, dass dieser nur dann schaltet, wenn die Differenz zwischen der Solldrehzahl und der Istdrehzahl z.B. einem Schwellwert entsprechend eine Abweichung von 5% unterschreitet, d.h. wenn der Motor deutlich langsamer läuft als gewünscht. Durch das Ausgangssignal am Schwellwertschalter 19 wird dann die Torschaltung 18 geöffnet und das Ausgangssignal des Vergleichers 106 zur Regelung an die Motorsteuerstufe 8 durchgeschaltet. Das positive Ausgangssignal des Schwellwertschalters 19 wirkt ferner auf die Steuerstufe 16, derart, dass die Steuerstufe 16 die Schaltstufe 15 auf den Ausgang n15 geschaltet hält.

Erreicht der Antriebsmotor 9 die vorgegebene Solldrehzahl, wird das Differenzsignal am Ausgang des Vergleichers 106 abnehmen. Unterschreitet das Ausgangssignal den Schwellwert des Schwellwertschalters 19, wird dessen Ausgangssignal gelöscht und entsprechend die Torschaltung 18 gesperrt. Aufgrund des fehlenden Signals vom Schwellwertschalter 19 wird die Steuerstufe die Schaltstufe 15 auf den Ausgang I15 umschalten, sodass der Stromregelkreis 22 aktiviert und der Drehzahlregelkreis 12 ausgeschaltet ist. Der Schwellwertschalter 119 des Stromregelkreises 22 aktiviert in gleicher Weise die Torschaltung 118 und die Steuerstufe 16, wie dies vorstehend zum Drehzahlregelkreis 12 beschrieben wurde. Nähert sich der Istwert des Motorstroms dem eingestellten Sollwert, wird das Ausgangssignal des Schwellwertschalters 119 gelöscht, worauf die Torschaltung 118 schliesst und die Steuerstufe 16 die Umschaltstufe 15 auf den Ausgang n15 zurückschaltet.

Um zu gewährleisten, dass insbesondere in der Anfahrphase des Antriebsmotors zu Beginn eines Conchierprozesses oder auch beim Übergang von einem Zeitabschnitt d4 auf einen folgenden Zeitabschnitt d5 u.dgl. der Antriebsmotor 9 rasch auf die gewünschte Drehzahl hochläuft, ist das Zeitglied t′ vorgesehen. So wird beim Einschalten des Hauptschalters S und aktiviertem Ausgang A13 des Wählschalters 13 das Zeitglied t′ gestartet, welches über die Steuerstufe 16 die Schaltstufe 15 für die eingestellte Zeitdauer auf dem Ausgang n15 hält. So erfolgt zeitabhängig zumindest in der Anlaufphase eine reine Frequenzregelung des Antriebmotors 9, sodass dieser - unabhängig von seiner Stromaufnahme - rasch auf die gewünschte Solldrehzahl hochläuft.

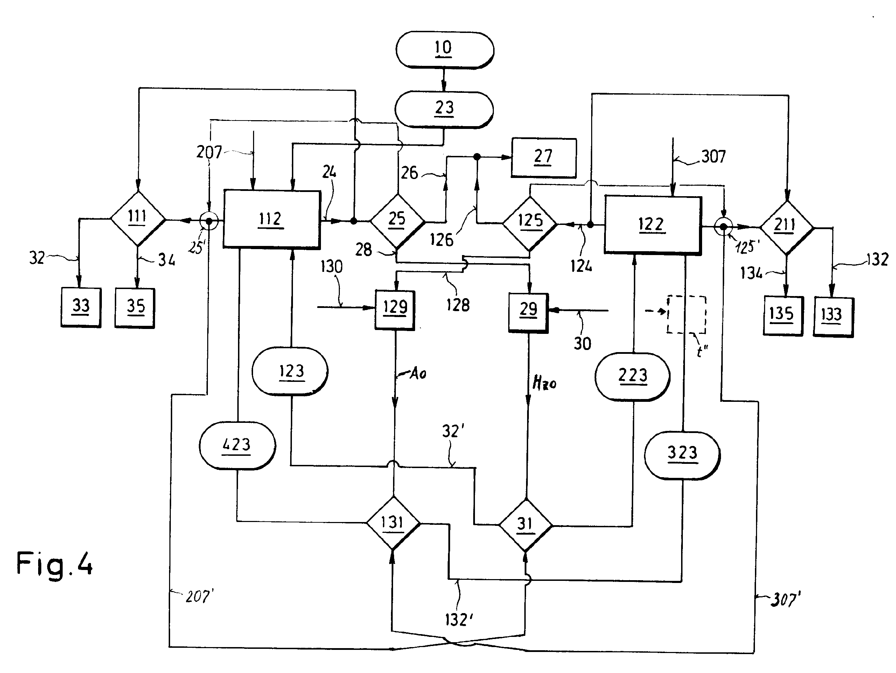

Im Falle der heute üblichen softwaremässigen Ausführung von Programmsteuerungen kann gemäss Fig. 4 vorgegangen werden, die eine ausführlicher Dargestellte Variante des In Fig. 2 veranschaulichten Prinzipes darstellt. Dabei wird anschliessend an den Start 10 durch eine feste Verknüpfung 23 auf eine Drehzahlregelung 112 geschaltet, die über einen Eingang 207 eine Solldrehzahl vorgegeben erhält. Entspricht die gemessene Istdrehzahl nicht diesem Sollwert, so ergibt sich eine Verknüpfung 24 zu einer Entscheidungsraute 25 zur Feststellung, ob die Drehzahlregelung nun in bereits Tätigkeit ist oder nicht. Bejahendenfalls wird der jeweilige Istwert über eine Verknüpfung 26 einer Istwertanzeige 27 zugeführt.

War aber die Drehzahlregelung bisher noch nicht in Betrieb, so ist es zweckmässig, wenn der gemessene Istwert über eine Verknüpfungsleitung 28 an einen Drehzahlrechner 29 ergeht, in dem der Istwert um einen bestimmten Prozentzahl vermindert wird. Diese Prozentzahl ist relativ gering und wird im allgemeinen 1% bis 10%, betragen, also vorzugsweise um ungefähr 5% liegen, wobei in Einzelfällen ein um 1% höherer oder tieferer Wert gewählt werden kann. In Einzelfällen kann sogar ein Wert von 0% ausreichend sein. Hiezu ist eine Eingabeverknüpfung 30 vorgesehen. Es versteht sich, dass alternativ auch der Sollwert (Eingang 207) dem Rechner 29 zugeführt werden könnte. An Stelle eines Prozentrechners mit anschliessender Subtraktion (bzw. entsprechender Multiplikation) liesse sich sicher auch ein einfacher Subtraktionskreis einsetzen, der den Istwert um einen vorbestimmten Wert vermindert.

Vorzugsweise erst nach dieser Subtraktion im Rechner 29 wird eine Entscheidungsraute 31 über eine Verknüpfung Hzo angewählt, der das Sollsignal des Einganges 207 über die Drehzahlregelung 112 und eine Verknüpfung 207′ zugeführt wird, und die nun diese Solldrehzahl mit dem um einen bestimmten Prozentsatz verminderten Wert vergleicht (entspricht also einer Vergleichsstufe) und feststellt, ob der Sollwert grösser als der Wert der Verknüpfung Hzo ist oder nicht. Ist die Solldrehzahl höher, d.h. der um einige Prozente verminderte Istwert erreicht ihn noch nicht, so geht das Signal über einen Verknüpfungsweg 32′ an eine feste Verknüpfung 123, die die Drehzahlregelung 112 weiter in Tätigkeit hält.

Die Drehzahlregelung arbeitet dann über eine Entscheidungsraute 111, der einerseits die Ist-Drehzahl aus der Verknüpfung 24 und anderseits die Solldrehzahl aus dem Eingang 207 über die Drehzahlregelung 112 zur Entscheidung zugeführt wird, ob die Solldrehzahl noch über der Istdrehzahl liegt. Behandenfalls ergeht über eine Verknüpfung 32 ein Befehl 33 zur Drehzahlerhöhung, etwa durch Öffnen eines Stromventiles. Umgekehrten Falles ergeht über eine Verknüpfung 34 ein Befehl 35 zur Drehzahlverminderung (z.B. "Stromventil schliessen"). Die Entscheidungsraute 111 ist über eine Schaltfunktion 25′ mit der Drehzahlregelung 112 verbunden, so dass in Abhängigkeit von der Entscheidung der Raute 25 der Sollwert aus der Drehzahlregelung 112 dann nicht der Entscheidungsraute 111 zugeführt wird, wenn die Drehzahlregelung gar nicht in Betrieb sein soll.

Erreicht nun dagegen an der Entscheidungsraute 31 die um wenige Prozente verminderte Istdrehzahl bereits den Sollwert, d.h. der Istwert liegt schon nahe dem Sollwert, so wird über eine Festverknüpfung 223 auf eine Stromregelung 122 umgeschaltet. Um nämlich die Regelzeitkonstante zu vermindern, ist die Zwischenetappe 28-30 von Vorteil, so dass nun, da die Solldrehzahl beinahe erreicht ist, das Augenmerk auf die Einhaltung der Motorleistung gerichtet werden muss.

Ähnlich der Drehzahlregelung 112 erhält auch die Leistungsregelung (im allgemeinen Stromregelung) 122 eine Sollwert-Vorgabe über einen Eingang 307. Entspricht der gemessene Leistungsparameter nicht diesem Sollwert, so ergibt sich eine Verknüpfung 124 zu einer Entscheidungsraute 125 zur Feststellung, ob die Leistungsregelung nun in bereits Tätigkeit ist oder nicht. Bejahendenfalls wird der jeweilige Istwert über eine Verknüpfung 126 der Istwertanzeige 27 zugeführt. Vorrichtungsmässig besitzt die Anzeige 27 entweder getrennte Felder für Drehzahl- und Stromanzeige, oder nur ein einziges Feld, in dem neben dem Wert auch ein Zeichen angezeigt wird, aus dem zu erkennen ist, ob es sich bei diesem Wert um die Drehzahl oder etwa den Strom handelt. Diese letztere Ausführung hat auch noch den Vorteil, dass dadurch sichtbar wird, welche der beiden Regelungen 112 oder 122 gerade in Betrieb ist.

War aber die Leistungsregelung bisher noch nicht in Betrieb, so ist es zweckmässig, wenn der gemessene Istwert über eine Verknüpfungsleitung 128 an einen Stromwertrechner 129 ergeht, in dem der Istwert um einen bestimmten Prozentzahl vergössert wird. Auch diese Prozentzahl ist relativ gering und wird sich in der oben für den Rechner 29 angegebenen Grössenordnung bewegen. Zur Eingabe des Prozentwertes ist ein Eingang 130 vorgesehen. Auch hier versteht sich, dass alternativ der Sollwert (Eingang 307) dem Rechner 129 zugeführt werden könnte. An Stelle eines Prozentrechners mit anschliessender Addition (bzw. entsprechender Multiplikation) liesse sich sicher auch ein einfacher Additionskreis einsetzen, der den Istwert um einen vorbestimmten Wert erhöht.

Vorzugsweise erst nach dieser Addition im Rechner 129 wird eine Entscheidungsraute 131 über eine Verknüpfung Ao angewählt, der das Sollsignal des Einganges 307 über die Leistungsregelung 122 und eine Verknüpfung 307′ zugeführt wird, und die nun diesen Sollwert des Leistungsparameters mit dem um einen bestimmten Prozentsatz vergrösserten Wert vergleicht (entspricht also einer Vergleichsstufe) und feststellt, ob der Sollwert grösser als der Wert der Verknüpfung Ao ist oder nicht. Ist der Sollwert (zugelassener Maximalwert) grösser als der um einige Prozentwerte vergrösserte Istwert, so wird über eine an einer Leitung 132′ gelegene Festverknüpfung 323 weiterhin auf die Leistungsregelung 122 zurückgeschaltet, um einen möglichst nahe dem zugelassenen Maximalwert gelegenen Istwert zu erzielen. Dabei kann aber der Festverknüpfung 323 gewünschtenfalls ein Zeitglied t˝ nach- oder auch vorgeschaltet sein, um den Übergang von Drehzahlregelung zur Leistungsregelung zu verzögern, zumal ja dieser Verknüpfungszweig nur dann beschritten wird, wenn die Leistungsregelung bisher noch nicht in Betrieb gesetzt war (vgl. die obigen Erläuterungen zur Entscheidungsraute 125). Dieses Zeitglied entspricht in etwa den Zeitgliedern t bzw. t′ (insbesondere dem ersteren) und könnte durch den Startschalter 10 mit dem Einschalten des Betriebes der Conche nur für eine begrenzte Zeit in Tätigkeit gesetzt werden, da so gerade bei leer anlaufender Conche ein Regelschwingen verhindert und eine Einschwingzeit für die Drehzahl gesichert wird. Der strichlierte Pfeil zum Zeitglied t˝ deutet die Eingabe der gewünschten Verzögerungszeit an. Damit wird also das Signal zur Beendigung der durch die Drehzahlregelung gegebenen Zeitdauer noch im Sinne einer Verzögerung beeinflusst, soferne nicht die Verzögerungszeit Null eingestellt wird.

Analog zur Drehzahlregelung arbeitet die Leistungsregelung über eine Entscheidungsraute 211, der einerseits die Ist-Leistung aus der Verknüpfung 124 und anderseits der Leistungs-Sollwert aus dem Eingang 307 über die Leistungsregelung 122 zur Entscheidung zugeführt wird, ob die Sollleistung bzw. der Sollstrom noch über dem Istwert liegt. Bejahendenfalls ergeht über eine Verknüpfung 132 ein Befehl 133 zur Drehzahlerhöhung (zur Vergrösserung der Stromaufnahme), umgekehrten Falles ergeht über eine Verknüpfung 134 ein Befehl 135 zur Drehzahlverminderung, um so die Stromaufnahme bzw. Leistung herabzusetzen. Hier wird der synergetische Effekt einer solchen Regelungskombination besonders deutlich. Analog zur Schaltfunktion 25′ ist hier eine Schaltfunktion 125′ vorgesehen, die den Sollwert dann nicht der Entscheidungsraute 211 zuführt, wenn eine Leistungsregelung gar nicht in Betrieb sein soll.

Ist an der Entscheidungsraute 131 der Sollstrom jedoch nicht mehr grösser als der um einige Prozente erhöhte Leistungs-Istwert (Ao), so geht das Signal an eine feste Verknüpfung 423, die auf die Drehzahlregelung 112 zurückschaltet, da ja nun die Maximalleistung gesichert erscheint. Die Rechnerstufe 129 bringt dabei den Vorteil, dass noch ein gewisser (geringer) Abstand zum maximal zugelassenen, und im allgemeinen sowieso so hoch wie möglich gewählten Leistungswert vorhanden ist, so dass der Motor während der Zeitdauer der Frequenzregelung nicht überraschend überlastet werden kann. Falls auch die Drehzahl dem Sollwert entspricht, wird sowieso gleich wieder auf die Leistungsregelung 122 umgeschaltet.

Es versteht sich, dass im Rahmen der Erfindung zahlreiche Abwandlungen möglich sind; beispielsweise wäre es denkbar, die über die Entscheidungsrauten 111 und 31 bzw. 211 und 131 getroffenen, an sich sehr ähnlichen Entscheidungen gemeinsam zu treffen und die Rechenoperation bei 29 bzw. 129 anschliessend durchzuführen. Es versteht sich ausserdem, dass die Darstellung der Fig. 4 leicht in ein entsprechendes Schaltschema umzusetzen ist, in dem die einzelnen Verknüpfungen die Leitungen zu einzelnen Schaltkreisen bezeichnen werden.

## Patentansprüche

1. Verfahren zum Betrieb einer Conche zum Verreiben und Verspachteln von Schokoladenmassen mit einem Trog, in dem wenigstens ein von einem elektrischen Antrieb (9) angetriebener Rotor umläuft, der über seinen Umfang verteilt und mit axialen Abstand zueinander angeordnete Versalbungswerkszeuge trägt, wobei der jeweilige Antrieb(9) von einer Motorsteuerschaltung (8) in Abhängigkeit eines durch Vergleich zwischen einem Sollwert und einem Istwert zumindest eines Motorleistungsparameters gebildeten Differenzsignals eines Leistungsregelkreises (22) gesteuert wird, und während des Betriebs der Conche für vorbestimmte Zeitabschnitte vorgegebene Drehzahlen und/oder Drehrichtungen eingestellt werden, dadurch gekennzeichnet, dass während zumindest eines Zeitabschnittes (d1 bis d7), bei der die Motordrehzahl unter einer vorbestimmten Solldrehzahl bleibt, das Differenzsignal des Leistungsregelkreises (22) für eine gegebene Zeitdauer unberücksichtigt bleibt und somit der Motor, unabhängig von der aufgenommenen Leistung, seine Solldrehzahl zu erreichen vermag.

2. Verfahren nach Anspruch 1, dadurch gekennzeichnet, dass das Differenzsignal bei Intriebnahme der Conche zu Beginn des ersten Zeitabschnitts (d4) unberücksichtigt bleibt, insbesondere übersteuert wird.

3. Verfahren nach Anspruch 1 oder 2, dadurch gekennzeichnet, dass das Differenzsignal innerhalb mehrerer Zeitabschnitte (d4, d5, d6, d7) unberücksichtigt bleibt bzw. übersteuert wird.

4. Verfahren nach einem der Ansprüche 1 bis 3, dadurch gekennzeichnet, dass die Übersteuerung des Differenzsignals durch Veränderung des Sollwertes, vorzugsweise über den sonst maximal zugelassenen Motorleistungsparameter hinaus, ausgeführt wird.

5. Verfahren nach einem der Ansprüche 1 bis 4, dadurch gekennzeichnet, dass für die gegebene Zeitdauer der Antrieb (9) durch einen Drehzahlregelkreis (12) gesteuert wird.

6. Verfahren nach Anspruch 5, dadurch gekennzeichnet, dass die gegebene Zeitdauer zumindest unmittelbar nach dem Beginn des Betriebes in ihrer zeitlichen Länge vorgegeben wird.

7. Verfahren nach Anspruch 5 oder 6, dadurch gekennzeichnet, dass der Drehzahlregelkreis (12) immer dann den Leistungsregelkreis (22) übersteuert, wenn die Istdrehzahl nahe der Solldrehzahl liegt.

8. Verfahren nach Anspruch 7, dadurch gekennzeichnet, dass eine Übersteuerung erfolgt, sobald die Istdrehzahl um einen vorbestimmten, relativ geringen Wert, z.B. um einen Wert zwischen 1% bis 10%, zweckmässig etwa 5% ± 1%, über der Solldrehzahl liegt.

9. Verfahren nach einem der Ansprüche 5 bis 8, dadurch gekennzeichnet, dass während wenigstens eines Teiles des Betriebes der Conche das Differenzsignal des Leistungsregelkreises (22) dann unberücksichtigt bleibt bzw. übersteuert wird, wenn der vorbestimmte Sollwert des Motorleistungsparameters nicht ausreicht, eine vorbestimmte Soll- Drehzahl aufrecht zu erhalten.

10. Verfahren nach Anspruch 7, 8 oder 9, dadurch gekennzeichnet, dass die Übersteuerung durch den Drehzahlregelkreis (12) erst dann beendet wird, wenn einerseits die Istdrehzahl nahe der Solldrehzahl liegt und anderseits der Istleistungswert des Antriebes nahe dem Solleistungswert liegt.

11. Verfahren nach Anspruch 10, dadurch gekennzeichnet, dass die Übersteuerung durch den Drehzahlregelkreis (12) dann beendet wird, wenn der Istleistungswert des Antriebes um einen vorbestimmten, relativ geringen Wert, z.B. um einen Wert zwischen 1% bis 10%, zweckmässig etwa 5% ± 1%, unter dem Solleistungswert liegt.

12. Verfahren nach einem der Ansprüche 5 bis 11, dadurch gekennzeichnet, dass das Ende der gegebenen Zeitdauer dann erreicht ist, wenn der Sollwert des Motorleistungsparameters wieder ausreicht, eine mindestens vorbestimmte Soll-Drehzahl aufrecht zu erhalten.

13. Conche zur Durchführung des Verfahrens nach einem der Ansprüche 1 bis 12, mit einer mit wenigstens einem Antriebsmotor (9) verbundenen Motorsteuerschaltung (8), die mit dem Ausgange eines Vergleichers (6) verbunden ist, dessen erstem Eingang der Istwert zumindest eines Motorleistungsparameters und dessen zweitem Eingang der Sollwert des Motorleistungsparameters von einem Sollwertgeber (7) zugeführt ist, dadurch gekennzeichnet, dass ein Schaltkreis (t; 15, 19, 119) vorgesehen ist, durch den die Motorsteuerschaltung (8) für eine gegebene Zeitdauer vom Ausgange des Vergleichers (6) abkoppelbar ist.

14. Conche nach Anspruch 13, dadurch gekennzeichnet, dass ein Zeitglied (t;t′) vorgesehen ist, durch das die gegebene Zeitdauer wenigstens zum Teil bestimmbar ist, wobei vorzugsweise ein Signal zur Beendigung der gegebenen Zeit, während welcher ein Drehzahlregelkreis aktiviert ist, durch das Zeitglied (t˝) verzögerbar ist.

15. Conche nach Anspruch 13 oder 14, dadurch gekennzeichnet, dass die Motorsteuerschaltung (8) für die gegebene Zeitdauer über die als Wechselschaltung ausgebildete Schalteinrichtung (15, 19, 119) mit dem Ausgang eines Drehzahlregelkreises (12) verbindbar ist.

16. Conche nach Anspruch 15, dadurch gekennzeichnet, dass die Wechselschaltung eine Abfrageschleife (11; 31) der Istdrehzahl und Vergleich mit der Solldrehzahl besitzt (Fig. 2, 4).

17. Conche nach einem der Ansprüche 13 bis 16, dadurch gekennzeichnet, dass die Wechselschaltung eine Abfrageschleife (131) des Leistungs-Istwertes und Vergleich mit dem Sollwert besitzt (Fig. 4).

18. Conche nach Anspruch 16 oder 17, dadurch gekennzeichnet, dass wenigstens einer der Abfrageschleifen ein Rechenglied (29, 129) zugeordnet ist, durch das im Falle des Leistungs-Istwertes eine Erhöhung desselben bzw. eine Verminderung des Sollwertes, erzielbar ist, im Falle des Drehzahl-Istwertes eine Verminderung desselben bzw. eine Vergrösserung des Sollwertes, und dass die so geänderten Werte dem Vergleich zuführbar sind (Fig. 4).

19. Conche nach einem der Ansprüche 15 bis 18, dadurch gekennzeichnet, dass die Wechselschaltung schwellwertbestimmende Glieder (19, 119) aufweist, denen das jeweilige Ausgangssignal eines Vergleichers (6, 106) zugeführt ist.

20. Conche nach Anspruch 19, dadurch gekennzeichnet, dass der Ausgang des jeweiligen schwellwertbestimmenden Gliedes (19, 119) eine UND-Verknüpfung (18, 118) für den Durchlass des Vergleichssignales zum Ausgange des Stromregelkreises (22) bzw. des Drehzahlregelkreises (12) steuert.

## Claims

1. A process for operating a conche for the trituration and smoothing of chocolate materials, having a vat in which at least one rotor which is driven by an electrical drive (9) rotates, which rotor carries spreading tools distributed over its periphery and at an axial distance from each other, wherein the respective drive (9) is controlled by a motor control circuit (8) according to a differential signal from an output regulator circuit (22) formed by a comparison between a desired value and a feedback value of at least one motor output parameter, and given speeds and/or directions of rotation are set for predetermined time intervals during the operation of the conche, characterised in that during at least one time interval (d1 to d7), in which the motor speed remains below a predetermined desired speed, the differential signal from the output regulator circuit (22) remains left out of consideration for a given period of time and thus the motor is able to reach its desired speed irrespective of the output consumed.

2. A process according to claim 1, characterised in that when the conche is set in operation the differential signal remains left out of consideration at the start of the first time interval (d4), and in particular is overdriven.

3. A process according to claim 1 or 2, characterised in that the differential signal remains left out of consideration or is overdriven over a plurality of time intervals (d4, d5, d6, d7).

4. A process according to any one of claims 1 to 3. characterised in that overdriving of the differential signal is effected by altering the desired value, preferably above the motor output parameter which is otherwise permissible.

5. A process according to any one of claims I to 4, characterised in that the drive (9) is controlled for the given period of time by a speed regulator circuit (12).

6. A process according to claim 5, characterised in that the temporal duration of the given period of time is preset at least directly after the start of operation.

7. A process according to claim 5 or 6, characterised in that the speed regulator circuit (12) always overdrives the output regulator circuit (22) when the actual speed is close to the desired speed.

8. A process according to claim 7, characterised in that overdriving is effected as soon as the actual speed is higher than the desired speed by a predetermined relatively low value, e.g. by a value between 1 and 10%, advantageously about 5% ± 1% above the desired speed.

9. A process according to any one of claims 5 to 8, characterised in that during at least part of the operation of the conche the differential signal from the output regulator circuit (22) remains left out of consideration or is overdriven when the predetermined desired value of the motor output parameter is insufficient to maintain a predetermined desired speed.

10. A process according to claims 7, 8 or 9, characterised in that overdriving by the speed regulator circuit (12) is not terminated until firstly the actual speed is close to the desired speed and secondly the actual output value of the drive is close to the desired output value.

11. A process according to claim 10, characterised in that overdriving by the speed regulator circuit (12) is terminated when the actual output value of the drive is less than the desired output value by a predetermined relatively low value, e.g. by a value between 1% and 10%, advantageously about 5% ± 1%, less than the desired output value.

12. A process according to any one of claims 5 to 11, characterised in that the end of the given period of time is reached when the desired value of the motor output parameter is again sufficient to maintain at least a predetermined desired speed.

13. A conche for carrying out the process according to any one of claims 1 to 12, having a motor control circuit (8) which is connected to at least one drive motor (9) and which is connected to the outputs of a comparator (6), to the first input of which comparator the actual value of at least one motor output parameter is fed, and to the second input of which the desired value of the motor output is fed by a desired value transmitter (7), characterised in that a switching circuit (t; 15, 19, 119) is provided, by means of which the motor control circuit (8) can be disconnected from the output of the comparator (6) for a given period of time.

14. A conche according to claim 13, characterised in that a time function element (t;t′) is provided, by means of which the given period of time can be at least partly determined, wherein a signal for terminating the given period during which a speed regulator circuit is activated can preferably be delayed by the time function element (t˝).

15. A conche according to claim 13 or 14, characterised in that the motor control circuit (8) can be connected for the given period of time via the switching device (15, 19. 119), which is constructed as a changeover circuit, to the output of a speed regulator circuit (12).

16. A conche according to claim 15, characterised in that the changeover circuit comprises an interrogation loop (11; 31) for the actual speed and a comparison with the desired speed (Figures 2, 4).

17. A conche according to any one of claims 13 to 16, characterised in that the changeover circuit comprises an interrogation loop (131) for the actual value of the output and a comparison with the desired value (Figure 4).

18. A conche according to claim 16 or 17, characterised in that a computational element (29, 129) is associated with at least one of the interrogation loops, by means of which computational element in the case of the actual value of the output an increase of the same or a decrease of the desired value can be attained and in the case of the actual value of the speed a decrease of the same or an increase of the desired value can be attained, and that the value altered in this manner can be fed to the comparison stage (Figure 4).

19. A conche according to any one of claims 15 to 18, characterised in that the changeover circuit comprises threshold-determining elements (19, 119) to which the respective output signal of a comparator (6, 106) is fed.

20. A conche according to claim 19, characterised in that the output of the respective threshold-determining element (19, 119) controls an AND switching operation (18, 118) for the passage of the comparison signal to the output of the current regulator circuit (22) or of the speed regulator circuit (12).

## Revendications

1. Procédé d'exploitation d'une conche, pour triturer et spatuler des masses de chocolat avec une cuve, dans laquelle tourne au moins un rotor, entraîné par un entraînement électrique (9), et portant des outils de brassage, repartis sur sa périphérie et placés à distance axiale les uns des autres, l'entraînement (9) spécifique étant commandé par un circuit de commande de moteur (8), en fonction d'un signal de différence, d'un circuit de régulation de puissance (22), signal constitué par comparaison entre une valeur de consigne et une valeur réelle d'au moins un paramètre de puissance moteur, et pendant le fonctionnement de la conche, pour des périodes de temps prédéterminées étant réglées des vitesses de rotation et/ou des sens de rotation prédéterminés, caractérisé en ce que, pendant au moins un intervalle de temps (d1 à d7), pendant lequel la vitesse de rotation moteur reste inférieure à une vitesse de rotation de consigne prédéterminée, le signal de différence du circuit de régulation de puissance (22) n'est pas pris en compte pendant une durée déterminée et, ainsi, le moteur peut atteindre sa vitesse de consigne, indépendamment de la puissance consommée.

2. Procédé selon la revendication 1, caractérisé en ce que le signal de différence reste non pris en considération, en particulier par le biais d'une surcommande, lors de la mise en service de la conche, au début de la première période de temps (d4).

3. Procédé selon la revendication 1 ou 2, caractérisé en ce que le signal de différence reste non pris en considération, respectivement est soumis à une surcommande, dans les limites de plusieurs périodes de temps (d4, d5, d6, d7).

4. Procédé selon l'une des revendications 1 à 3, caractérisé en ce que la surcommande du signal de différence est réalisée par modification de la valeur de consigne, de préférence à une valeur supérieure au paramètre de puissance moteur maximal admis par ailleurs.

5. Procédé selon l'une des revendications 1 à 4, caractérisé en ce que l'entraînement (9) est commandé par ùn circuit de régulation de vitesse de rotation (12) pour la période donnée.

6. Procédé selon la revendication 5, caractérisé en ce que la période donnée est prédéterminée, concernant sa durée, au moins directement après le début du fonctionnement.

7. Procédé selon la revendication 5 ou 6, caractérisé en ce que le circuit de régulation de vitesse (12) produit toujours une surcommande du circuit de régulation de puissance (22) lorsque la vitesse réelle de rotation est proche de la vitesse de rotation de consigne.

8. Procédé selon la revendication 7, caractérisé en ce qu'une surcommande s'effectue dès que la vitesse de rotation réelle est supérieure à la vitesse de rotation de consigne, d'une valeur prédéterminée relativement faible, par exemple d'une valeur comprise entre 1 et 10 %, de préférence d'à peu près 5 % ± 1 %.

9. Procédé selon l'une des revendications 5 à 8, caractérisé en ce que pendant au moins une partie du fonctionnement de la conche, le signal de différence du circuit de régulation de puissance (22) reste non pris en considération, respectivement est l'objet d'une surcommande, lorsque la valeur de consigne prédéterminée du paramètre de puissance moteur ne suffit pas pour maintenir une vitesse de rotation de consigne prédéterminée.

10. Procédé selon la revendication 7, 8 ou 9, caractérisé en ce que la surcommande opérée par le circuit de régulation de vitesse (12) est achevée lorsque, d'une part, la vitesse de rotation réelle est proche de la vitesse de rotation de consigne et que, d'autre part, la valeur de puissance réelle de l'entraînement est proche de la valeur de consigne de la puissance.

11. Procédé selon la revendication 10, caractérisé en ce que la surcommande opérée par le circuit de régulation de vitesse de rotation (12) est achevée lorsque la valeur réelle de puissance de l'entraînement est inférieure à la valeur de consigne de puissance, d'une valeur prédéterminée relativement faible, par exemple d'une valeur comprise entrè 1 % et 10 %, de préférence d'à peu près 5 % ± 1 %.

12. Procédé selon l'une des revendications 5 à 11, caractérisé en ce que la fin de la durée déterminée est atteinte lorsque la valeur de consigne du paramètre de puissance moteur suffit de nouveau pour conserver une valeur de vitesse de rotation de consigne au moins prédéterminée.

13. Conche pour mettre en oeuvre le procédé selon l'une des revendications 1 à 12, avec un dispositif de commande moteur (8) relié à au moins un moteur d'entraînement (9) et relié à la sortie d'un comparateur (6) à la première entrée duquel la valeur réelle d'au moins un paramètre de puissance moteur et à la deuxième entrée duquel la valeur de consigne du paramètre de puissance moteur venant d'un capteur de valeur de consigne (7) est amenée, caractérisée en ce qu'un circuit de commutation (t; 15, 19, 119) est prévu, au moyen duquel le circuit de commande moteur (6) peut être découplé des sorties du comparateur (6), pendant une durée déterminée.

14. Conche selon la revendication 13, caractérisée en ce qu'un organe temporel (t; t′) est prévu, au moyen duquel la durée donnée peut être au moins en partie déterminée, un signal destiné à l'achèvement de la durée donnée, pendant laquelle un circuit de régulation de vitesse de rotation est activé, pouvant de préférence être retardé au moyen de l'organe temporel (t˝).

15. Conche selon la revendication 13 ou 14, caractérisée en ce que le circuit de commande moteur (8) destiné à la durée donnée peut être relié à la sortie d'un circuit de régulation de vitesse de rotation (12) par l'intermédiaire du dispositif de commutation (15, 19, 119) réalisé comme circuit à alternance.

16. Conche selon la revendication 15, caractérisée en ce que le circuit à alternance comporte une boucle d'interrogation (11; 31) concernant la vitesse de rotation réelle et de comparaison avec la vitesse de rotation de consigne (figures 2, 4).

17. Conche selon l'une des revendications 13 à 16, caractérisée en ce que le circuit à alternance comporte une boucle d'interrogation (131) de la valeur réelle de puissance et de comparaison avec la valeur de consigne (figure 4).

18. Conche selon la revendication 16 ou 17, caractérisée en ce qu'à au moins l'une des boucles d'interrogation est associé un organe de calcul (29, 129) au moyen duquel on peut obtenir pour la valeur réelle de la puissance une augmentation de celle-ci, respectivement une diminution de la valeur de consigne, et concernant la valeur réelle de la vitesse de rotation une diminution de celle-ci ou une augmentation de la valeur de consigne et en ce que les valeurs ainsi modifiées peuvent être amenées à la fonction de comparaison (figure 4).

19. Conche selon l'une des revendications 15 à 18, caractérisée en ce que le circuit à alternance présente des organes à détermination de valeurs de seuil (19, 119), auxquels le signal de sortie respectif d'un comparateur (6, 106) est amené.

20. Conche selon la revendication 19, caractérisée en ce que la sortie de l'organe à détermination de valeurs de seuil (19, 119) respectif commande une combinaison logique ET (18, 118) pour le passage du signal de comparaison vers les sorties du circuit de régulation de courant (22), respectivement le circuit de régulation de vitesse (12).
